**Europäisches Patentamt**

**European Patent Office**

**Office européen des brevets**

(19)

(11) Veröffentlichungsnummer : **0 136 282 B2**

# (12) NEUE EUROPÄISCHE PATENTSCHRIFT

(45) Veröffentlichungstag der neuen Patentschrift :
**11.03.92 Patentblatt 92/11**

(51) Int. Cl.$^5$ : **H02K 7/102**

(21) Anmeldenummer : **84890162.5**

(22) Anmeldetag : **29.08.84**

(54) **Vorrichtung zum Abbremsen von Elektromotoren.**

(30) Priorität : **31.08.83 AT 3113/83**

(43) Veröffentlichungstag der Anmeldung :
**03.04.85 Patentblatt 85/14**

(45) Bekanntmachung des Hinweises auf die
Patenterteilung :
**13.07.88 Patentblatt 88/28**

(45) Bekanntmachung des Hinweises auf die
Entscheidung über den Einspruch :
**11.03.92 Patentblatt 92/11**

(84) Benannte Vertragsstaaten :
**AT BE CH DE FR GB IT LI LU NL SE**

(56) Entgegenhaltungen :
**DE-A- 2 456 091**

(56) Entgegenhaltungen :
**DE-A- 2 919 672**
**DE-A- 2 946 760**
**DE-B- 2 751 841**
**DE-U- 8 016 723**
**DE-U- 8 032 798**
**US-A- 2 827 135**

(73) Patentinhaber : **AUSTRIA Antriebstechnik G.**
**Bauknecht Aktiengesellschaft**
**G.-Bauknecht-Strasse 1**
**A-8740 Zeltweg-Spielberg (Steiermark) (AT)**

(72) Erfinder : **Ott, Josef**
**Lantschachergasse 36**
**A-8720 Knittelfeld (Steiermark) (AT)**

(74) Vertreter : **Beer, Otto, Dipl.-Ing. et al**
**Lindengasse 8**
**A-1071 Wien (AT)**

EP 0 136 282 B2

Jouve, 18, rue Saint-Denis, 75001 PARIS

## Beschreibung

Die Erfindung betrifft eine Vorrichtung zum Abbremsen von Elektromotoren mit Kurzschlußläufern, mit einem im wesentlichen topfförmigen Bremskörper, der wenigstens teilweise aus weichmagnetischem Werkstoff besteht und der mindestens eine Schrägfläche aufweist, die einer am Kurzschlußring vorgesehenen, ebenen Keilfläche, die zur Achse des Kurzschlußläufers schräg ausgerichtet ist, zugekehrt ist, wobei die Schrägfläche an einem zum Kurzschlußring hin ragenden Vorsprung des topfförmigen Bremskörpers vorgesehen ist, der vom Boden des Bremskörpers in das Innere des Bremskörpers ragt, und wobei zwischen dem Bremskörper und einem gehäusefesten Bauteil des Elektromotors ein Bremsbelag und zwischen dem Bremskörper und dem Kurzschlußläufer eine drückende Feder vorgesehen ist.

Bremsen für Elektromotoren, die dazu dienen, den Elektromotor nach dem Abschalten möglichst rasch zum Stillstand zu bringen, sind bekannt. Nachteilig bei den bekannten mechanischen Bremsen ist der Umstand, daß sie nicht im Inneren der abzubremsenden Motore integriert werden können und oft einen komplizierten Aufbau besitzen. Es sind auch elektronische Bremsen vorgeschlagen worden, die wiederum den Nachteil haben, daß sie bei Netzausfall oder vollständiger Unterbrechung des Stromkreises versagen.

Es sind auch schon mechanische Bremsen für Elektromotore mit Kurzschlußläufern bekannt geworden, bei welchen der Bremskörper vom Streufeld des Kurzschlußläufers entgegen der Kraft einer Rückstellfeder gelüftet wird. Nachteilig bei diesen aus den Dokumenten DE-A-2 456 091, DE-B-2 751 841 und DE-A-2 946 760 bekannten Bremsen ist der Umstand, daß der Bremskörper ausschließlich durch die Kraft der Rückstellfeder in seine Wirkstellung gedrückt wird, wobei aber die Federkraft nur so groß gewählt werden kann, daß sie vom Streufeld des Motors überwunden werden kann.

Bei der aus der DE-A-2 335 954 bekannten Vorrichtung für Bremsmotoren ist der Läufer mit seiner Welle ausschließlich über einen gleichzeitig als Betätigungsorgan für die Bremse dienenden Stift gekuppelt. Diese Ausbildung setzt voraus, daß der Läufer axial verschiebbar auf der Welle sitzt. Überdies hat sich gezeigt, daß bei einer derartigen Ausbildung einer Bremse für Elektromotoren der Betätigungsstift an der Schrägfläche nach dem Abbremsen des Motors hängenbleibt, so daß der Läufer in der Bremsstellung zurückgehalten wird und der Motor nicht wieder anlaufen kann. Ein weiterer Nachteil dieser bekannten Vorrichtung besteht darin, daß das Verschieben des Läufers in die Bremsstellung bzw. das Wiederanheben des Läufers entgegen der Reibung zwischen am Läufer vorgesehenen Armen und Nuten an einer Scheibe, in welche die Arme eingreifen, verschoben werden muß.

Nachteilig bei der aus der DE-A-2 335 954 bekannten Anordnung ist schließlich, daß beim Betätigen und beim Lösen der Bremse der gesamte Kurzschlußläufer mit seiner großen Masse verschoben werden muß. Aus all diesen Gründen ist die aus der DE-A-2 335 954 bekannte Vorrichtung zum Abbremsen von Elektromotoren nachteilig und arbeitet nur träge.

Aus der DE-A-3 036 091 ist eine Vorrichtung zum Abbremsen von Elektromotoren mit Kurzschlußläufern bekannt, die einen im wesentlichen topfförmigen Bremskörper aufweisen, der wenigstens teilweise aus weichmagnetischem Werkstoff besteht und der mindestens eine Schrägfläche aufweist, die einem mit dem Kurzschlußläufer drehfest verbundenen Betätigungsorgan zugekehrt ist, wobei zwischen dem Bremskörper und einem gehäusefesten Bauteil des Elektromotors ein Bremsbelag und zwischen dem Bremskörper und dem Kurzschlußläufer eine den Bremskörper gegen den Bremsbelag drückende Feder angeordnet sind.

Nachteilig bei dieser bekannten Vorrichtung ist einmal, daß eine große Anzahl von Bauteilen, nämlich ein topfförmiges Bremsorgan, eine in diesem verschiebbar geführte Betätigungsscheibe mit Schrägflächen, eine Druckfeder zwischen der Betätigungsscheibe und dem Topfboden, ein Verschlußdeckel für den Bremskörper, der mit diesem durch vier Befestigungsorgane zu verbinden ist, ein Betätigungsbolzen, und eine weitere Druckfeder im Motor untergebracht werden müssen. Ein weiterer Nachteil der aus der DE-A-3 036 091 bekannten Vorrichtung besteht darin, daß zur Betätigung der Bremse der durch die Welle des Kurzschlußläufers gesteckte Betätigungsbolzen mit Schrägflächen zusammenwirkt. Es ergeben sich dadurch die bereits im Zusammenhang mit der DE-A-2 335 954 geschilderten Nachteile. Schließlich besteht ein Nachteil noch darin, daß die Bremsfläche und somit die Bremsbeläge von der Achse des Kurzschlußläufers einen erheblich größeren Abstand aufweisen als die Betätigungsorgane (Betätigungsstift und Schrägflächen).

Um die oben im Zusammenhang mit der aus der DE-A-2 335 954 bekannten Bremse erwähnte Gefahr des Hängenbleibens des Betätigungsstiftes an der Schrägfläche zu verringern, ist in der DE-A-3 036 091 (vgl. Seite 7, 1. Absatz) noch vorgeschlagen, die Rückstellfeder mit abgeknickten Enden auszubilden, mit denen sie in die Ankerplatte und in den Motor eingreift. Damit soll gewährleistet werden, daß sich der durch die Welle des Kurzschlußläufers gesteckte Betätigungsbolzen während des Stillstandes des Motors stets im tiefsten Bereich der Schrägflächen befindet.

Eine Vorrichtung mit den Merkmalen des Oberbegriffes des Patentanspruches 1 ist aus der DE-A-29 19 672 bekannt. Bei dieser bekannten Vorrichtung sind die Schrägflächen als Teilzylinderflächen ausgebildet und

2

wirken mit im Kurzschlußring versenkten Keilflächen zusammen. Der Bremskörper wirkt bei der DE-A-29 19 672 über eine Bremsscheibe, die gegenüber dem Bremskörper achsial verschiebbar ist, und die durch eine zweite Feder von diesem weggedrückt wird, mit dem Bremsbelag zusammen.

Der Erfindung liegt die Aufgabe zugrunde, eine robuste, mechanische Auslaufbremse anzugeben, die unabhängig von auftretenden Netzschwankungen oder Belastungszuständen des Motors funktioniert.

Erfindungsgemäß wird dies bei einer Vorrichtung der eingangs genannten Gattung dadurch erreicht, daß die Feder den Bremskörper unmittelbar gegen den Bremsbelag drückt, daß die Keilfläche an einem am Kurzschlußring des Kurzschlußläufers angeordneten Vorsprung vorgesehen ist, daß die Schrägfläche eben und zur Achse des Kurzschlußläufers in der gleichen Schräglage wie die Keilfläche am Kurzschlußring ausgerichtet ist und daß die Schrägfläche und die Keilfläche gegenüber dem Boden und der Wand des Bremskörpers geneigt sind.

Die erfindungsgemäße Auslaufbremse wird beim Einschalten des Motors dadurch gelüftet, daß der Bremskörper vornehmlich durch das entstehende Streufeld des Stators und zusätzlich durch jenes des mit einer Kurzschlußläuferwicklung ausgerüsteten Rotors des Asynchronmotors axial angezogen wird und somit nicht gegen den Bremsbelag drückt. Beim Abschalten des Motors, in gleicher Weise bei völligem Netzausfall, wird der Bremskörper von der Druckfeder vom Rotor weggedrückt und es entsteht Reibung zwischen dem Bremskörper, dem Bremsbelag und dem gehäusefesten Bauteil, gegen welche der Bremsbelag anliegt. Durch diese Reibungskraft wird der Bremskörper zufolge der aufeinander einwirkenden Keil- und Schrägflächen zusätzlich vom Rotor weggedrückt und die Bremskraft erhöht. Durch gezielte Wahl der Neigung der Keilflächen und sinngemäß der Schrägflächen kann die beim Abschalten des Motors entstehende Bremskraft den jeweils gegebenen Verhältnissen angepaßt werden. Mit der erfindungsgemäßen Vorrichtung können beispielsweise Rasenmähermotoren in nur 2 bis 3 Sekunden bis zum völligen Stillstand abgebremst werden. Dieser Zeitwert liegt weit unter dem allgemein geforderten Wert von 5 Sekunden.

Vorteile der erfindungsgemäßen Ausbildung gegenüber dem Stand der Technik liegen einmal in der geringen Anzahl der benötigten Bauteile, überdies ist es bei der erfindungsgemäßen Vorrichtung nicht mehr notwendig, mit der Welle des Kurzschlußläufers Stifte od. dgl. Betätigungsorgane zu verbinden, sondern die Betätigungsorgane für die Bremse sind unmittelbar am Kurzschlußring des Kurzschlußläufers vorgesehen und können bevorzugt mit diesem einstückig ausgebildet sein. Dadurch, daß bei der erfindungsgemäßen Vorrichtung ebene Schrägflächen mit ebenen Keilflächen, statt wie beim Stand der Technik ebene Flächen mit runden Betätigungsstiften oder teilzylindrischen Flächen, zusammenwirken, besteht auch keine Gefahr, daß sich die Betätigungsorgane mit dem Bremskörper verklemmen.

Die erfindungsgemäße Ausführungsform der Bremsvorrichtung zeichnet sich durch besondere Robustheit und weitgehende Verschleißfreiheit der Gleitflächen aus, so daß der Werkstoff des Kurzschlußringes ohne Nachteil gleichzeitig als Gleitpartner im Bereich der Schrägflächen dienen kann.

Die erfindungsgemäße Bremse kann sich weiters dadurch auszeichnen, daß der Bremsbelag von der Achse des Kurzschlußläufers im wesentlichen den gleichen Radialabstand besitzt wie die Keilfläche und die Schrägfläche. Dadurch, daß der Radialabstand der Bremsflächen im wesentlichen gleich groß ist wie der Abstand der Betätigungsflächen von der Achse des Kurzschlußläufers, ergeben sich günstigere Hebelverhältnisse als bei den bekannten Vorrichtungen.

Die erfindungsgemäße Vorrichtung ist von der Drehrichtung des Rotors unabhängig, wenn am Kurzschlußring wenigstens ein Paar einander gegenüberliegender Keilflächen und am Bremskörper wenigstens ein zwischen die Keilflächen eingreifender, zwei Schrägflächen aufweisender Vorsprung vorgesehen ist.

Im Rahmen der Erfindung kann vorgesehen sein, daß der Bremsbelag als gegebenenfalls, wie an sich bekannt, ein- oder mehrfach unterteilter Ring ausgebildet ist, der in eine gegebenenfalls unterbrochene Nut in einem gehäusefesten Bauteil des Elektromotors oder im Bremskörper eingesetzt ist.

In Weiterbildung dieser Ausführungsform kann erfindungsgemäß vorgesehen sein, daß die Tiefe der Nut größer ist als der Lüftungshub des Bremskörpers und daß die Dicke des Bremsbelages größer ist als die Tiefe der Nut. Bei dieser Ausführungsform genügt es, wenn die Bremsbelagteile, die beispielsweise eine nierenförmige Umrißform besitzen, in die Nuten im Bremskörper oder im feststehenden Gehäuseteil, z.B. einem Lagerschild des Motors, eingelegt werden.

In einer weiteren Ausführungsform der Erfindung ist vorgesehen, daß der am Bremskörper vorgesehene Vorsprung sowohl von dem Boden als auch von der Wand des Bremskörpers ausgehend in das Innere des Bremskörpers ragt. Diese Ausführungsform eignet sich besonders für im Sinterverfahren hergestellte Bremskörper.

Im Rahmen der Erfindung kann der am Bremskörper vorgesehene Vorsprung aus dem Bremskörper hochgepresst sein. Diese Ausführungsform eignet sich bevorzugt für im Tiefziehverfahren hergestellte topfförmige Bremskörper.

Normalerweise wird der ringförmige Bremskörper mit etwas Spiel über der Welle des Kurzschlussläufers

EP 0 136 282 B2

sitzen. Es ist aber auch eine Ausführungsform denkbar, bei der in der Mitte des Topfes eine mit Gleitsitz über die Welle des Kurzschlussläufers gesteckte Hülse vorgesehen ist. Hiebei kann vorgesehen sein, dass die den Bremskörper belastende Feder über die Hülse gesteckt ist. Dadurch wird eine noch exaktere Führung des Bremskörpers erreicht.

Der Lüftungshub des Bremskörpers kann bei der erfindungsgemässen Vorrichtung besonders einfach dadurch begrenzt werden, dass die im wesentlichen zylindermantelförmige Wand des Bremskörpers den die Keilfläche tragenden vorsprung übergreifend bis vor die zugekehrte Stirnfläche des Kurzschlussläufers ragt, wobei der freie Rand der Wand abgeschrägt ist und einer entsprechend abgeschrägten Kante der stirnfläche des Kurzschlussläufers gegenüberliegt.

Weitere Einzelheiten und Merkmale der Erfindung ergeben sich aus der nachstehenden Beschreibung der in den Zeichnungen wiedergegebenen Ausführungsbeispiele. Es zeigt:

Figur 1 im Schnitt einen mit der erfindungsgemässen Vorrichtung ausgerüsteten Asynchronmotor mit Kurzschlussläufer,

Figur 2 den Kurzschlussläufer des Motors aus Figur 1 in Schrägansicht,

Figur 3 in Schrägansicht einen topfförmigen Bremskörper,

Figur 4, 5 und 6 eine weitere Ausführungsform eines Bremskörpers,

Figur 7 und 8 einen aus Blech gepressten Bremskörper,

Figur 9 eine Variante der Anordnung des Bremsbelages im Lagerschild des Motors,

Figur 10 eine Ausführungsform mit einem als Blechteil ausgebildeten Lagerschild und

Fig. 11 einen Motor mit einem aus Blech geprägten Lagerschild.

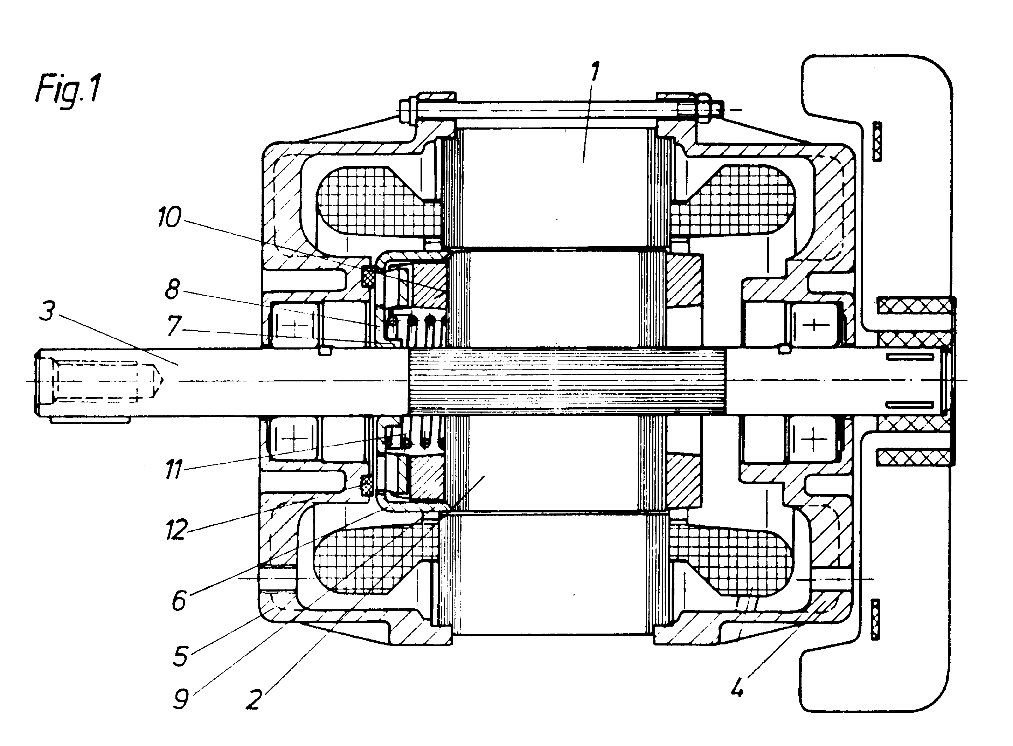

Der in Figur 1 gezeigte Asynchron-Kurzschlussläufermotor besteht aus einem Stator 1 und einem als Kurzschlussläufer ausgebildeten Rotor 2, dessen Welle in Lagerschilden 4 und 5 drehbar gelagert ist. Über das in Figur 1 linke Ende der Welle 3 ist ein Bremskörper 6 gesteckt. Der im wesentlichen ringförmige Bremskörper 6 besitzt eine Hülse 7, die mit Gleitsitz auf der Welle 3 sitzt, einen Boden 8 und eine Wand 9, die bis unmittelbar vor die zugekehrte Stirnfläche des Rotors 2 ragt. Wie aus Figur 1 weiters ersichtlich, ist sowohl das freie, dem Rotor 2 zugekehrte Ende der Wand 9 als auch die zugekehrte Kante des Rotors 2 abgeschrägt.

Über die Hülse 7, die mit Gleitsitz auf der Welle 3 sitzt, ist eine Schraubenfeder 11 gesteckt, die den Bremskörper 6 vom Rotor weg gegen einen Bremsbelag 12 drückt.

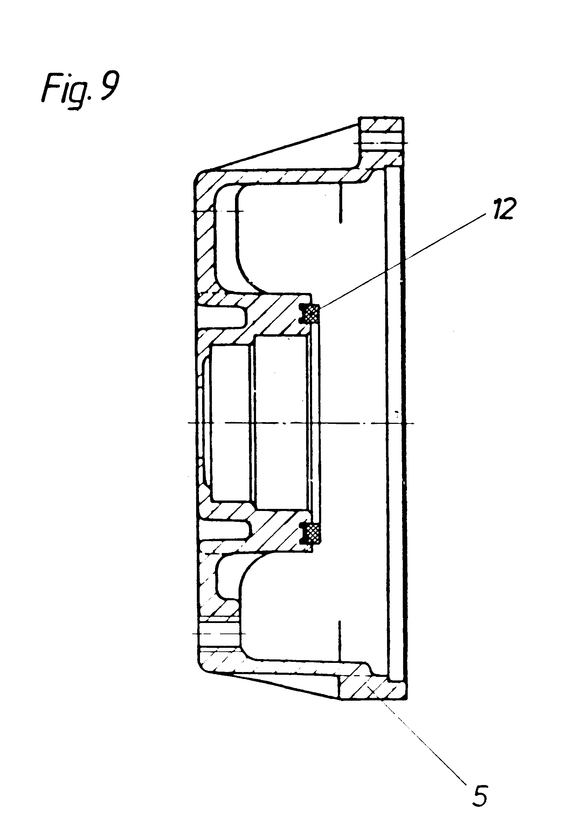

Der Bremsbelag 12 kann ein durchgehender Ring sein, der in eine entsprechende Nut des Lagerschildes 5 eingesetzt ist. Eine zur Anordnung nach Figur 1 alternative Ausführungsform ist in Figur 9 gezeigt. Es ist aber auch möglich, den Bremsbelag 12, ganz gleich, ob dieser ein durchgehender Ring ist oder in mehrere Ringsegmente unterteilt ist, statt im gehäusefesten Lagerschild 5 des Motors auch im Bremskörper 6 vorzusehen. In diesem Fall weist der Bremskörper 6 in den Zeichnungen nicht gezeigte, ringförmige oder teilringförmige Nuten auf. Wenn der Lüftungshub des Bremskörpers 6 kleiner ist als die Stärke des Bremsbelages 12, dann genügt es, diesen in die ihn aufnehmende Nut des Lagerschildes 5 oder des Bremskörpers 6 einfach einzulegen. Diese Ausbildung, die ohne Festkleben der Bremsbelagteile auskommt, gestatt ein besonders einfaches Auswechseln der Bremsbeläge.

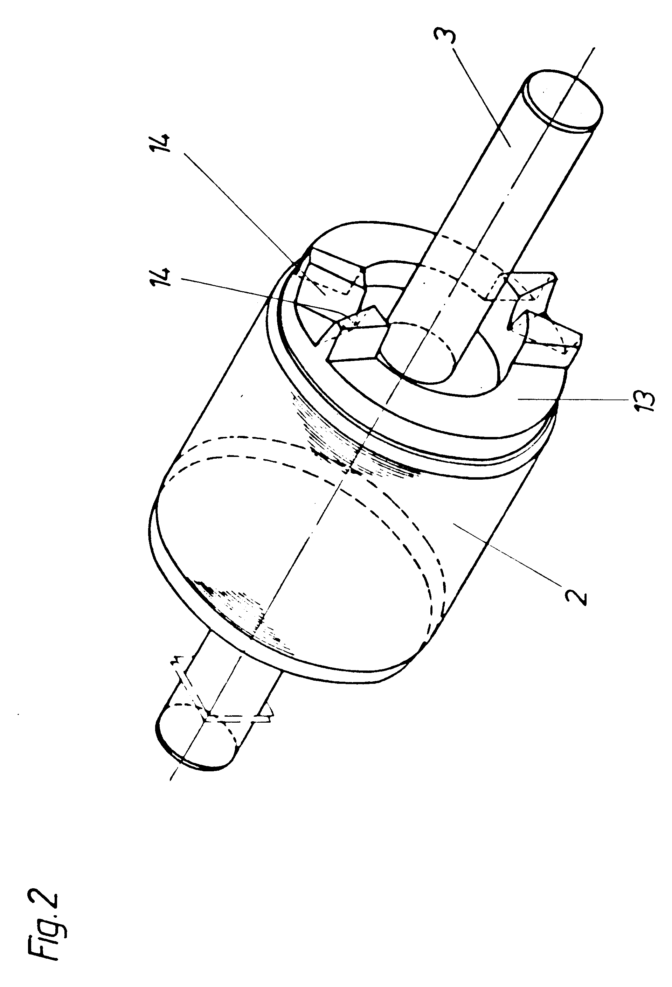

Wie insbesondere Figur 2 zeigt, sind am Kurzschlussring 13 des als Kurzschlussläufer ausgebildeten Rotors 2 Keilflächen 14 vorgesehen. Wie ebenfalls aus Figur 2 ersichtlich, liegen die Keilflächen 14 einander paarweise gegenüber und sind sowohl gegenüber einer zur Drehachse des Rotors 2 senkrechten Ebene als auch gegenüber einer durch die Achse der Welle 3 gehenden Ebene geneigt.

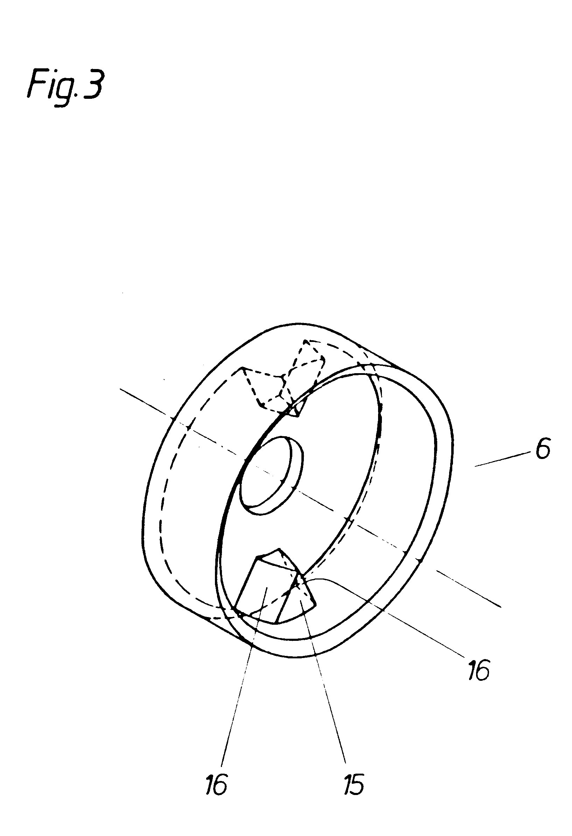

Aus Figur 3 ist ersichtlich, dass am Bremskörper 6 zwischen die Keilflächen 14 am Kurzschlussring 13 eingreifende Vorsprünge 15 mit schrägflächen 16 vorgesehen sind.

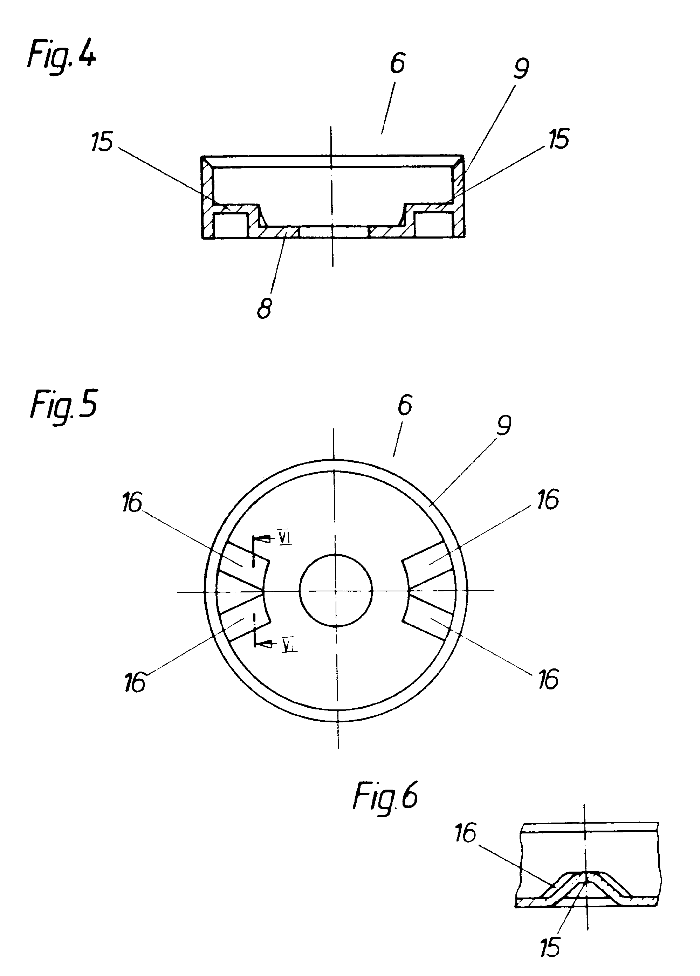

Eine andere Ausführungsform des Bremskörpers ist in den Figuren 4 bis 6 gezeigt, wobei dort der Bremskörper aus Sinterwerkstoff besteht. Auch hier besitzt der Bremskörper 6 vorsprünge 15 mit Schrägflächen 16.

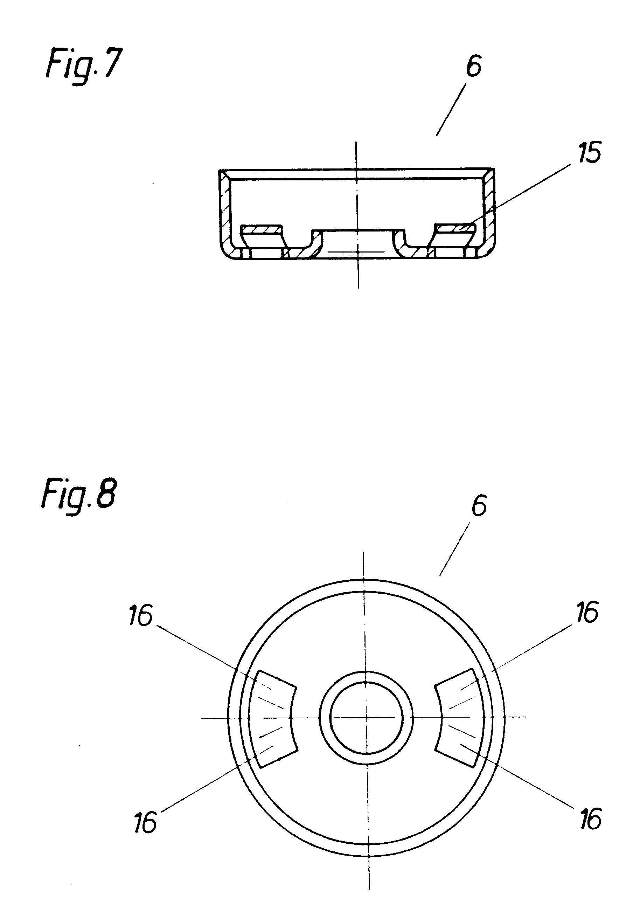

Eine dritte Ausführungsform des Bremskörpers zeigen die Figuren 7 und 8. Bei dieser Ausführungsform ist der Bremskörper 6 aus Blech gepresst und im wesentlichen topfförmig ausgebildet. Es ist ersichtlich, dass die die Schrägflächen 16 aufweisenden Vorsprünge 15 aus dem Boden 8 des topfförmigen Bremskörpers 6 hochgepresst sind.

Obwohl in den gezeigten Ausführungsbeispielen mehrere Keilflächen 14 und dementsprechend mehrere Schrägflächen 16 vorgesehen sind, sind auch Ausführungsformen mit weniger oder mehr als vier Schrägflächen 16 denkbar.

Des weiteren ist es gleichgültig, auf welcher Seite des Rotors 2 die erfindungsgemässe Vorrichtung zum Abbremsen vorgesehen ist. Es kann somit die in Figur 1 links vom Rotor liegende Vorrichtung genauso an der rechten Seite des in Figur 1 gezeigten Motors oder an beiden Seiten angeordnet sein.

Gemäss einer weiteren, nicht gezeigten Ausführungsform kann der Bremskörper als Ringscheibe ausgebildet sein, wobei über den Kurzschlussring 13, der die Keilflächen 14 trägt, ein Ring gesteckt ist, dessen axiale Abmessung grösser ist als die Höhe der Keilflächen. Der Ring kann auch auf den Kurzschlussring 13 aufgeschrumpft sein.

Die erfindungsgemässe Vorrichtung arbeitet wie folgt:

Sobald der Motor eingeschaltet wird, wird der aus magnetisch leitendem Werkstoff bestehende Bremskörper 6 vorwiegend vom Streufeld des Stators 1 gegen den Rotor gezogen, bis das freie Ende der Wand 9 des Bremskörpers 6 gegen die stirnfläche 10 des Rotors anliegt. Dabei wird die Druckfeder 11 etwas zusammengedrückt und die Bremse ist gelüftet. Auch bei Leerlauf des Motors, wenn der Rotor also nahezu synchron läuft, genügt das Streufeld, den Bremskörper 6 anzuziehen und die Bremse zu lüften, weil die Druckfeder 11 gerade so stark dimensioniert sein braucht, dass sie nach dem Abschalten des Motors den Bremskörper 6 vom Rotor weg drücken kann. Sobald der Bremskörper 6 vom Rotor 2 weggedrückt wird, entsteht zwischen Bremskörper 6, Bremsbelag 12 und dem gehäusefesten Teil, z.B. dem Lagerschild 5, eine Bremskraft, die zur Folge hat, dass sich der Bremskörper 6 gegenüber dem Rotor 2 verdreht und die Schrägflächen 16 des Bremskörpers auf den Keilflächen 14 des Kurzschlussringes 13 auflaufen, wodurch die Bremskraft weiter erhöht wird. Diese weitere Erhöhung der Bremskraft erfolgt vollständig unabhängig von der Stärke der Druckfeder 11 und hat zur Folge, dass der Rotor 2 innerhalb kürzester Zeit abgebremst wird. Dabei kann die Abbremszeit durch Verändern der Neigung der bremsverstärkenden Keil- bzw. Schrägflächen dem jeweiligen Anwendungsfall angepasst werden, wobei flacher ausgebildete Keil- und Schrägflächen eine stärkere Bremskraft zur Folge haben.

Damit der Bremskörper 6 vom Streufeld zum Rotor 2 hin gezogen und damit die Bremse gelüftet werden kann, muss der Bremskörper 6 mindestens teilweise aus magnetisch leitendem Werkstoff bestehen oder mit einem Teil mit magnetisch leitendem Werkstoff verbunden sein.

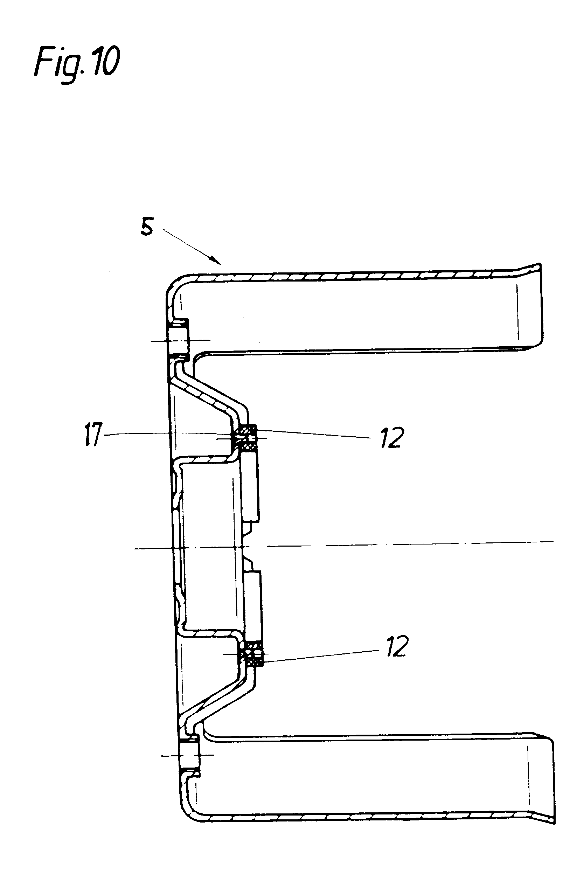

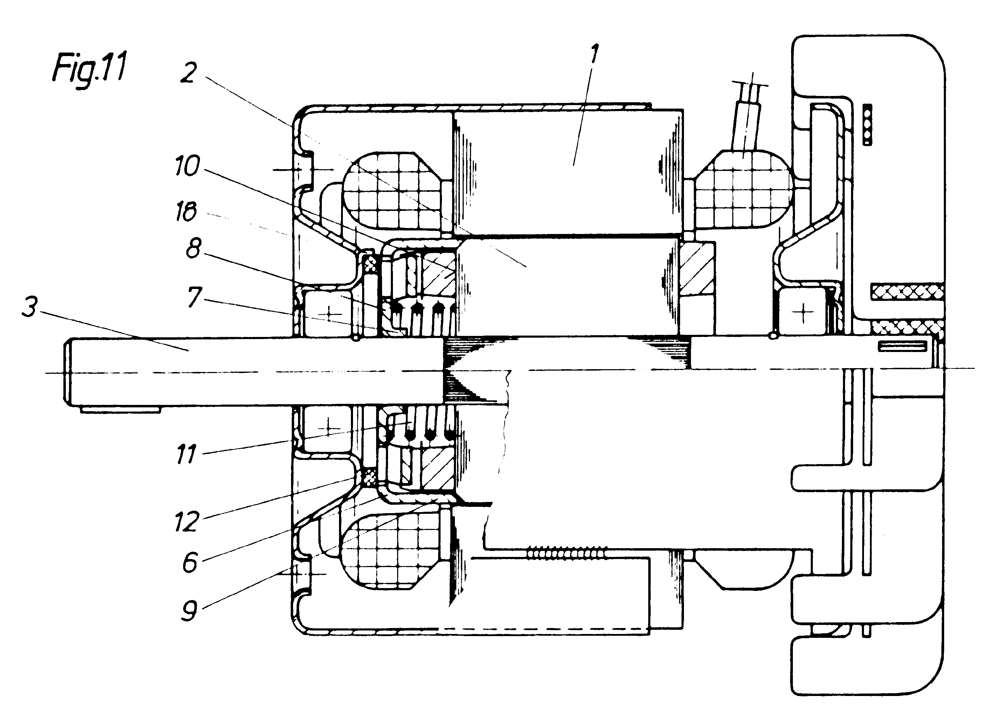

Die Erfindung kann auch bei Motoren verwirklicht werden, deren Lagerschilde aus einem Blechpressteil bestehen. Ein derartiges Lagerschild 5 zeigt Figur 10, bei dem der Bremsbelag 12 durch Nieten 17 befestigt ist. Es ist aber durchaus möglich, den Bremsbelag 12 durch Kleben zu befestigen und/oder, wie in Figur 11 gezeigt, innerhalb von Haltezungen 18 einzulegen.

Die erfindungsgemässe Vorrichtung zum Abbremsen kann überall dort angewandt werden, wo mit einem Asynchronmotor ausgerüstete Geräte aus sicherheitsgründen nach dem Abschalten rasch zum stillstand kommen sollen. Dies ist beispielsweise bei Rasenmähern, Häckslern, Kreissägen u. dgl. der Fall.

Bei zweipoligen Motoren (etwa 300 U/min) haben die Keilflächen und die Schrägflächen etwa den gleichen Radialabstand von der Drehachse des Kurzschlussläufers wie der Bremsbelag. Bei grösseren Kurzschlussringabmessungen, in der Regel bei höherpoligen Motoren, bei welchen die gleichen mechanischen Elemente (z. B. Lagerschild) verwendet werden, kann der Radialabstand des Bremsbelages auch kleiner sein als der der Keilflächen und Schrägflächen.

## Patentansprüche

1. Vorrichtung zum Abbremsen von Elektromotoren mit Kurzschlußläufern (2), mit einem im wesentlichen topfförmigen Bremskörper (6), der wenigstens teilweise aus weichmagnetischem Werkstoff besteht und der mindestens eine Schrägfläche (16) aufweist, die einer am Kurzschlußring (13) vorgesehenen, ebenen Keilfläche (14), die zur Achse des Kurzschlußläufers (2) schräg ausgerichtet ist, zugekehrt ist, wobei die Schrägfläche (16) an einem zum Kurzschlußring (13) hin ragenden Vorsprung (15) des topfförmigen Bremskörpers (6) vorgesehen ist, der vom Boden (8) des Bremskörpers (6) in das Innere des Bremskörpers (6) ragt, und wobei zwischen dem Bremskörper (6) und einem gehäusefesten Bauteil (5) des Elektromotors ein Bremsbelag (12) und zwischen dem Bremskörper (6) und dem Kurzschlußläufer (2) eine drückende Feder (11) vorgesehen ist, dadurch gekennzeichnet, daß die Feder (11) den Bremskörper (6) unmittelbar gegen den Bremsbelag (12) drückt, daß die Keilfläche (14) an einem am Kurzschlußring (13) des Kurzschlußläufers (2) angeordneten Vorsprung vorgesehen ist, daß die Schrägfläche (16) eben und zur Achse des Kurzschlußläufers (2) in der gleichen Schräglage wie die Keilfläche (14) am Kurzschlußring (13) ausgerichtet ist und daß die Schrägfläche (16) und die Keilfläche (14) gegenüber dem Boden (8) und der Wand (9) des Bremskörpers (6) geneigt sind.

2. Vorrichtung nach Anspruch 1, dadurch gekennzeichnet, daß der Bremsbelag (12) von der Achse des Kurzschlußläufers (2) im wesentlichen den gleichen Radialabstand besitzt wie die Keilfläche (14) und die Schrägfläche (16).

3. Vorrichtung nach Anspruch 1 oder 2, dadurch gekennzeichnet, daß am Kurzschlußring wenigstens ein Paar einander gegenüberliegender Keilflächen (14) und am Bremskörper wenigstens ein zwischen die Keilflächen (14) eingreifender, zwei Schrägflächen (16) aufweisender Vorsprung (15) vorgesehen ist.

4. Vorrichtung nach einem der Ansprüche 1 bis 3, dadurch gekennzeichnet, daß der Bremsbelag (12) als gegebenenfalls, wie an sich bekannt, ein- oder mehrfach unterteilter Ring ausgebildet ist, der in eine gegebenenfalls unterbrochene Nut in einem gehäusefesten Bauteil (5) des Elektromotors oder im Bremskörper (6) eingesetzt ist.

5. Vorrichtung nach Anspruch 4, dadurch gekennzeichnet, daß die Tiefe der Nut größer ist als der Lüftungshub des Bremskörpers (6) und daß die Dicke des Bremsbelages (12) größer ist als die Tiefe der Nut.

6. Vorrichtung nach einem der Ansprüche 1 bis 5, dadurch gekennzeichnet, daß der am Bremskörper (6) vorgesehene Vorsprung (15) sowohl von dem Boden (8) als auch von der Wand (9) des Bremskörpers (6) ausgehend in das Innere des Bremskörpers (6) ragt.

7. Vorrichtung nach einem der Ansprüche 1 bis 5, dadurch gekennzeichnet, daß der am Bremskörper (6) vorgesehene Vorsprung aus dem Boden des Bremskörpers (6) hochgepreßt ist.

8. Vorrichtung nach einem der Ansprüche 1 bis 7, dadurch gekennzeichnet, daß in der Mitte des Bremskörpers (6) eine mit Gleitsitz über die Welle (3) des Kurzschlußläufers (2) gesteckte Hülse (7) vorgesehen ist.

9. Vorrichtung nach Anspruch 8, dadurch gekennzeichnet, daß die zwischen Bremskörper (6) und Kurzschlußläufer (2) vorgesehene Feder (11) über die Hülse (7) gesteckt ist.

10. Vorrichtung nach einem der Ansprüche 1 bis 9, dadurch gekennzeichnet, daß die im wesentlichen zylindermantelförmige Wand (9) des Bremskörpers (6) den die Keilfläche (14) tragenden Vorsprung übergreifend bis vor die zugekehrte Stirnfläche (10) des Kurzschlußläufers (2) ragt, wobei der freie Rand der Wand (9) abgeschrägt ist und einer entsprechend abgeschrägten Kante der Stirnfläche (10) des Kurzschlußläufers (2) gegenüberliegt.

## Claims

1. Device for braking electric motors with squirrel-cage rotors (2), with a substantially cup-shaped brake body (6) which consists at least partially of magnetically soft material and which has at least one inclined face (16), which faces a flat wedge surface (14) provided on the short-circuit ring (13) and orientated obliquely with respect to the axis of the squirrel-cage rotor (2), wherein the inclined face (16) is provided on a projection (15) of the cup-shaped brake body (6) projecting towards the short-circuit ring (13) into the interior of the brake body (6) from the bottom (8) of the brake body (6), and wherein a brake pad (12) is arranged between the brake body (6) and a component (5) fast with the housing of the electric motor and a compression spring (11) is arranged between the brake body (6) and the squirrel-cage rotor (2), characterized in that the spring (11) presses the brake body (6) directly against the brake pad (12), in that the wedge surface (14) is provided on a projection arranged on the short-circuit ring (13) of the squirrel-cage rotor (2), in that the inclined face (16) is flat and orientated at the same obliqueness to the axis of the squirrel-cage rotor (2) as the wedge surface (14) on the short-circuit ring (13), and in that the inclined face (16) and the wedge surface (14) are inclined relative to the bottom (8) and the wall (9) of the brake body (6).

2. Device according to claim 1, characterized in that the brake pad (12) has substantially the same radial spacing from the axis of the squirrel-cage rotor (2) as the wedge surface (14) and the inclined face (16).

3. Device according to claim 1 or 2, characterized in that there are provided at least one pair of opposed wedge surfaces (14) on the short-circuit ring and, on the brake body, at least one projection (15) engaging between the wedge surfaces (14) and having two inclined faces (16).

4. Device according to any of claims 1 to 3, characterized in that the brake pad (12) is formed, as desired, as known per se, as a unitary or multiply divided ring which is set into a groove, interrupted if desired, in a component (5) of the electric motor fast with the housing or in the brake body (6).

5. Device according to claim 4, characterized in that the depth of the groove is greater than the clearance stroke of the brake body (6) and in that the thickness of the brake pad (12) is greater than the depth of the groove.

6. Device according to any claims 1 to 5, characterized in that the projection (15) provided on the brake body (6) projects into the interior of the brake body (6) both from the bottom (8) and also from the wall (9) of the brake body (6).

7. Device according to any of claims 1 to 5, characterized in that the projection provided on the brake body (6) is pressed up bout of the bottom of the brake body (6).

8. Device according to any of claims 1 to 7, characterized in that there is provided in the centre of the brake body (6) a bush (7) fitted slidingly in the shaft (3) of the squirrel-cage rotor (2).

9. Device according to claim 8, characterized in that the spring (11) provided between the brake body (6) and the squirrel-cage rotor (2) is fitted over the bush (7).

10. Device according to any of claims 1 to 9, characterized in that the substantially cylindrical formed peripheral wall (9) of the brake body (6) engaging over the projection carrying the wedge surface (14) projects up to the opposed end surface (10) of the squirrel-cage rotor (2), the free edge of the wall (9) being bevelled and opposed to a correspondingly bevelled edge of the end surface (10) of the squirrel-cage rotor (2).

## Revendications

1. Dispositif servant à freiner les moteurs électriques à rotor en court-circuit (2), avec un corps de frein (6) en forme générale de pot qui consiste au moins partiellement en une matière magnétique douce et qui présente au moins une surface inclinée (16) qui est tournée vers une surface en coin (14) plane, inclinée par rapport à l'axe du rotor en court-circuit (2), prévue sur la bague de court-circuit (13), la surface inclinée (16) étant prévue sur une saillie (15) du corps de frein (6) en forme de pot, dirigée vers la bague de court-circuit (13), laquelle saillie (15) part du fond (8) du corps de frein (6) vers l'intérieur du corps de frein (6) et une garniture de frein (12) étant prévue entre le corps de frein (6) et un élément de construction (5) solidaire du boîtier du moteur électrique et un ressort de poussée (11) étant prévu entre le corps de frein (6) et le rotor en court-circuit (2), caractérisé en ce que le ressort (11) applique le corps de frein (6) directement contre la garniture de frein (12), en ce que la surface en coin (14) est prévue sur une saillie sur la bague de court-circuit (13) du rotor en court-circuit (2), en ce que la surface inclinée (16) est plane et est disposée par rapport à l'axe du rotor en court-circuit (2) avec la même inclinaison que la surface en coin (14) sur la bague de court-circuit (13), et en ce que la surface inclinée (16) et la surface en coin (14) sont inclinées par rapport au fond (8) et à la paroi (9) du corps de frein (6).

2. Dispositif suivant revendication 1, caractérisé en ce que la distance radiale entre la garniture de frein (12) et l'axe du rotor en court-circuit (2) est quasiment identique à celle de la surface en coin (14) et de la surface inclinée (16).

3. Dispositif suivant revendication 1 ou 2, caractérisé en ce qu'il est prévu sur la bague de court-circuit au moins une paire de surfaces en coin (14) opposées et sur le corps de frein au moins une saillie (15) avec deux surfaces inclinées (16) qui s'engage entre les surfaces en coin ( 14).

4. Dispositif suivant l'une des revendications 1 à 3, caractérisé en ce que la garniture de frein (12) est, le cas échéant, réalisée d'une manière généralement connue, sous la forme d'un anneau à un ou plusieurs segments, qui est inséré dans une rainure, le cas échéant discontinue, aménagée dans un élément de construction (5) solidaire du boîtier du moteur électrique ou dans le corps de frein (6).

5. Dispositif suivant revendication 4, caractérisé en ce que la profondeur de la rainure est supérieure à la course de décollement du corps de frein (6) et en ce que l'épaisseur de la garniture de frein (12) est supérieure à la profondeur de la rainure.

6. Dispositif suivant l'une des revendications 1 à 5, caractérisé en ce que la saillie (15) prévue sur le corps de frein (6) part non seulement du fond (8) mais encore de la paroi (9) du corps de frein (6) vers l'intérieur du corps de frein (6).

7. Dispositif suivant l'une des revendications 1 à 5, caractérisé en ce que la saillie prévue sur le corps de frein (6) est emboutie dans le fond du corps de frein (6).

8. Dispositif suivant l'une des revendications 1 à 7, caractérisé en ce qu'au milieu du corps de frein (6) est prévu un manchon (7) monté coulissant sur l'arbre (3) du rotor en court-circuit (2).

9. Dispositif suivant revendication 8, caractérisé en ce que le ressort (11) prévu entre le corps de frein (6) et le rotor en court-circuit (2) est enfilé sur le manchon (7).

10. Dispositif suivant l'une des revendications 1 à 9, caractérisé en ce que la paroi (9) essentiellement cylindrique du corps de frein (6) dépasse la saillie portant la surface en coin (14) et s'étend jusqu'à la face frontale adjacente (10) du rotor en court-circuit (2), le bord libre de la paroi (9) étant incliné et opposé au bord incliné correspondant de la face frontale (10) du rotor en court-circuit (2).

Fig.1

Fig.2

EP 0 136 282 B2

Fig. 3

Fig.4

Fig.5

Fig.6

*Fig. 7*

6

15

*Fig. 8*

6

16

16

16

16

Fig. 9

*Fig.10*

Fig.11

EP 0 136 282 B2